# EUROPÄISCHE PATENTSCHRIFT

(11) **EP 1 670 618 B1**
(45) Veröffentlichungstag und Bekanntmachung des Hinweises auf die Patenterteilung: **05.06.2013**
(21) Anmeldenummer: 04762503.3
(22) Anmeldetag: 24.07.2004
(51) Int. Cl.: B25F 5/00, H01H 9/06

(54) **Akkuschrauber**
Battery-driven screwdriver
Visseuse à batterie

(30) Priorität: 29.09.2003 DE 10345136
(43) Veröffentlichungstag der Anmeldung: 21.06.2006
(73) Patentinhaber: ROBERT BOSCH GMBH, 70442 Stuttgart (DE)
(72) Erfinder: KAGELER, Sven, 11900 Bayan Lepas Penang (MY); YUH GAN, Ginn, 10450 Penang (MY); AZIZ ZULFIKAR, Abdul, 10050 Penang (MY)
(86) Internationale Anmeldenummer: PCT/DE2004/001656
(87) Internationale Veröffentlichungsnummer: WO 2005/039829

(56) Entgegenhaltungen:
- EP-A- 0 899 066
- EP-A- 1 266 725
- EP-A- 1 314 518
- EP-A1- 0 025 938
- WO-A1-02/078416
- US-A- 3 369 615
- US-A- 4 493 223
- US-A- 4 739 242
- US-A- 6 106 971
- US-A1- 2003 094 294
- PATENT ABSTRACTS OF JAPAN Bd. 1997, Nr. 06, 30. Juni 1997 (1997-06-30) & JP 9 047982 A (NIPPON ELECTRIC IND CO LTD), 18. Februar 1997 (1997-02-18)

## Beschreibung

### Stand der Technik

Die vorliegende Erfindung geht aus von einem Akkuschrauber gemäß dem Oberbegriff des Anspruchs 1. Ein solcher Akkuschrauber ist aus der WO 02/078416 A1 bekannt.

Es gibt bereits Akkuschrauber in der Leistungsklasse zwischen 2.4V bis 3.6V, wie beispielweise aus der EP 1 066 930 bekannt. Diese haben zumeist mehrere NiCd-Zellen als Energiespeicher, einen Ein-Aus-Schalter mit kurzer Schalttaste und ohne stufenlose Drehzahlregelung sowie einen Schalter zur Umschaltung von Links- auf Rechtslauf, ein die Motordrehzahl untersetzendes Getriebe, insbesondere Planetengetriebe, und einen Motor mit einem Standard-Durchmesser von 27.5mm. Dabei gibt es stabförmige und pistolenförmige Ausführungen sowie Ausführungen mit winkelverstellbarem Griff. Diese Geräte werden zum Laden entweder über einen Stecker mit dem Ladegerät verbunden - ähnlich wie ein Handy oder ein Rasierapparat - oder über eine Halterung mit Kontakten, in die das Gerät gelegt wird. Die Halterungen sind z. B. an einer Wand befestigbar, um die Handhabung beim Laden zu vereinfachen.

Dazu muss zuvor für das Ladegerät und die elektrische Verbindung der Lademodus hergestellt werden, was jedoch nicht automatisch nach jedem Einsatz geschieht. Dadurch ist das Gerät oft gerade dann nicht einsatzbereit ist, wenn es benötigt wird, wobei der bekannte Memoryeffekt nachteilig hinzukommt. NiCd Zellen entladen nach einer gewissen Zeit ohne Leistungsabgabe und auch unbenutzte Akku-Schrauber sind nach kurzer Zeit teilentladen. Werden sie geladen, wenn sie teil-entladen sind, steht aufgrund des Memoryeffekts nach dem Ladevorgang nur die Differenz der Neulademenge - und damit eine verringerte Leistung - zur Verfügung.

Ein weiterer Nachteil der bekannten Akkuschrauber ist deren voluminöse Baugröße infolge großer Baugruppen, z.B. des Getriebes, der Schaltersysteme und der Akkus in Gestalt von NiCd Zellen, deren Größe "4/5 Sub-C" bei Anordnung im Handgriff die Ergonomie und die Verwendbarkeit beeinträchtigt, da enge, winklige Schraubstellen nicht erreichbar sind.

### Vorteile der Erfindung

Die Erfindung ist in Anspruch 1 beschrieben, Vorteilhafte Ausführungen sind in den Unteransprüchen beschrieben.

Durch die Verwendung nur einer einzigen langen und schlanken fest im Handgriff des Akkuschraubers eingebauten Lithium-Ionen (Li-Ion)-Zelle anstelle mehrerer 4/5 Sub-C Nickel-Cadmium-Zellen als Akku kann ein besonders kleiner Griffumfang erreicht werden. Eine deutlich reduzierte, äußerst handliche Baugröße im "Damenrevolverformat" wird darüberhinaus durch Ersatz einer üblichen, kastenartigen Schalter-Baueinheit durch ein nur etwa 10% dessen Volumens beanspruchenden, mit der Ein-Ausschalt-Taste verbundenes Kontaktblech erreicht, das zwei Gegenkontakte bei Verschieben der Taste miteinander elektrisch verbindet. Das Kontaktblech ist dazu in die Ein-Ausschalt-Taste geschraubt.

Zwei relativ große, harte Spiralfedern halten die Ein-Ausschalt-Taste vorgespannt in Ihrer Ausschalt-Position und verhindern durch schnelles Öffnen bzw. Schließen der Kontakte bei deren über die Lebensdauer zunehmender Hochohmigkeit deren Verschweißen mit dem Kontaktblech.

Die besonders lange, sich über nahezu die gesamte Innenseite des Handgriffs erstreckende Ein-Ausschalt-Taste hat einen kurzen Betätigungshub und ist dadurch an jeder beliebigen Stelle zuverlässig einschaltend besonders leicht betätigbar. Dadurch sind - unabhängig von der Betätigungsposition - nur geringe Bedienkräfte nötig und das Gerät kann bequem in nahezu jeder Position der Bedienhand eingeschaltet werden. Um die Führung der Ein-Ausschalt-Taste gegenüber dem Gehäuse zu verbessern, hat sie zwei seitliche Führungszungen auf ihrer Innenseite, die im Gehäuse abgestützt gleitgelagert sind.

Weitere Volumenreduzierung des Akkuschraubers wird durch kompakte Bauweise des Getriebes und Getriebegehäuses erreicht, wobei das Getriebe als Planetengetriebe lediglich in das zylindrische Getriebegehäuse eingelegt, durch ein Axialsicherungsblech am Herausfallen gehindert wird. Dabei dient das Getriebegehäuse mit einer Innenverzahnung selbst als Sonnenrad.

Dadurch, dass das dem Getriebe zugeordnete Motorwellenende eine Abflachung hat und die entsprechende Eingriffsöffnung der Getriebeeingangswelle die entsprechende Negativform hat, ist eine einfache, leicht montierbare, kompakte Kupplung zwischen Motor und Getriebe geschaffen, die auch grobe Toleranzen zulässt und dabei zuverlässig arbeitet.

Dadurch, dass sich das Motorgehäuse aus mittig geteilten Halbschalen zusammensetzt, die das zylindrische Getriebegehäuse zangenartig mit radial nach innen ragenden Stützzungen von beiden Seiten umgreifen und zentriert in Montageposition festhalten, ist ohne gesonderte Befestigungs- oder Führungselemente wie Schrauben, Zentrierstifte oder Überrastelemente das Getriebegehäuse präzise und sicher mit dem Motorgehäuse verbindbar.

Weitere Gewichts- und Volumenreduzierung des Akkuschraubers wird durch Verzicht auf ein Spannfutter erreicht, wobei mittels Innensechskant der Abtriebswelle - passend für entsprechende Schraub- oder Bohrbits mit Sechskantschaft - diese Werkzeuge schnell und einfach wechselbar sind.

Da die Li-Ion-Zelle fast keine Selbstentladung hat, ist der Akkuschrauber auch nach langen Benutzungspausen voll einsatzbereit, wobei in Benutzungspausen der Akkuschrauber beliebig lange auf der Ladeschale im Lademodus ruhen kann. Dabei ist die Ladeschale standsicher auf eine ebene Ablagefläche stellbar und muss nicht befestigt und auch nicht festgehalten werden, wenn der Akkuschrauber entnommen wird. Dadurch ist er immer mit nur einer Hand schnell entnahmebereit, wobei kein Stecker gezogen oder keine Halterung entfernt werden muss. Außerdem ist jederzeit automatisch sichergestellt, dass der Akkuschrauber geladen wird.

Die kompakte Li-Ion-Zelle sitzt spielfrei lagegesichert verspannt im Inneren der halbschalenartigen Handgriffbereiche, wobei an ihren Endbereichen zwei angeschweißte Kontaktfahnen mit elektrischen Zuleitungen zur Platine verlötet sind. Sie ist in die Festigkeitsstruktur des Handgriffs integriert und erhöht dessen Formsteifigkeit bei geringem Materialeinsatz für die Halbschalen des Gehäuses.

Die für die Steuerung vorgesehene Platine ist Chassis der Einschaltkontakte, der Ladekontaktzungen, des Schiebeschalters für Richtungsumkehr sowie der 2 Leuchtdioden für die Drehrichtungsanzeige und der Steuerungsmittel des Lade- und Entladestroms der Li-Ion-Zelle. Längs im Inneren des Handgriffs angeordnet ist auch die Platine als zusätzliche Querrippe in die Festigkeitsstruktur des Gehäuses bzw. des Handgriffs integriert und erhöht dessen Biegesteifigkeit erheblich.

Statt eines in dieser Klasse üblichen kastenartigen Ein-Aus-Schalters, der jeweils eine Position für Rechts- bzw. Linkslauf hat, wurde das Konzept getrennter rechts-/Linkslauf-Vorwahl übernommen. Während bei bisherigen Bohrschraubern dazu eine gesonderte Baugruppe auf den kastenartigen Hauptschalter aufgesetzt ist, wird hier ein auf die Platine gelöteter, einfacher und kostengünstiger Schiebeschalter, z.B. Massenware aus dem Elektronikhandel - über den üblichen Schieber von Hand ansteuerbar und damit eine einfach aufgebaute Drehrichtungsumschalung geschaffen.

Ein-Ausschalt-Taste und Drehrichtungsumschalter sind so gestaltet, dass zum einen bei gedrückter Ein-Ausschalt-Taste der Drehrichtungsumschalter gesperrt ist und nicht bewegt werden kann und zum anderen die Ein-Ausschalt-Taste gesperrt ist und nicht in Einschaltposition gedrückt werden kann, wenn der Drehrichtungsumschalter in der Mittelstellung, der empfohlenen Transportstellung, steht.

Die auf der Platine aufgelöteten Ladekontaktzungen ragen durch Öffnungen im unteren Ende des Handgriffs und werden in Ladestellung von Gegenkontakten der Ladeschale kontaktiert, wobei keine zusätzlichen Kabel oder Kupplungsstecker betätigt werden müssen.

Je nach Drehrichtung des Motors leuchtet eine grüne oder rote auf die Platine gelötete Leuchtdiode auf. Diese sind durch mittels transparentem Kunststoffteil als Fenster überdeckte Öffnungen im Gehäuse hindurch sichtbar.

Das Getriebegehäuse ist zugleich das Außenrad des Planetengetriebes. Dadurch wird ein zusätzliches Bauteil gespart und das Geräte schlank und kompakt mit geringem Eckenmaß (Spindelachse zur Außenkontur). Dabei sind die Zahnquerschnitte bzw. die Zahnhöhe des Außenrades des Planetengetriebes (Getriebegehäuse) zugleich Anschlag einer Sicherungsscheibe, die als Axialsicherung dient und die motorseitige Begrenzung der Planetenräder der ersten Stufe bildet. Die Sicherungsscheibe hat zwei über ihren Umfang ragende Flügel, die bajonettverschlussartig in zwei entsprechende Vertiefungen des Getriebegehäuse rastbar und durch Verdrehen in einer anschließenden Ringnut gegen axiales Lösen sicherbar sind. Dies ist zugleich eine Transportsicherung für das gesondert zulieferbare Getriebe. Die Scheibe wird im eingebauten Zustand jeweils durch ihre Flügel zwischen dem Motor und dem Getriebegehäuses gehalten. Es ist auch eine Sicherungsscheibe mit abstehenden, abgewinkelten Flügeln verwendbar, die in die Vertiefungen durch Einpressen sicherbar sind.

Das Planetengetriebe ist mit einem Autolock-System versehen, d.h. mit selbstarretierender Abtriebsspindel bei Drehen derselben durch Kraftangriff von Außen. Dessen Getriebegehäuse besitzt motorseitig oben und unten axiale Verlängerungen mit einer Ringnut und einem Ringwulst. In diese Ringnut greifen Ringwulste der Halbschalen des Motorgehäuses ein, die ein entsprechendes Gegenprofil besitzen. Damit wird das Getriebegehäuse ohne weitere Bauteile wie Schrauben, Nieten oder Überrastzungen aufgenommen und axial fixiert. Seitlich, wo das Getriebe zwischen diesen Verlängerungen Aussparungen aufweist, ragen axiale GegenVerlängerungen der Halbschalen hinein. Diese Anordnung dient als Verdrehsicherung des Getriebegehäuses gegenüber dem Motorgehäuse - ohne Verwendung gesonderter Bauteile. Die axialen Verlängerungen sind asymmetrisch, um eine eindeutige Montage zu gewährleisten.

Das Getriebegehäuse, die Platine mit Akku, Motor, Leuchtdioden und elektrischen Elementen sowie der Schalterdrücker mit Kontaktblech und Federn und das transparente Kunststoffteil werden in eine erste Halbschale gelegt, mit der zweiten Halbschale geschlossen und mit nur vier gleichen Schrauben geschlossen und damit komplett montiert und ergeben eine sehr kostengünstige Lösung.

Die kompakte Bauform macht es möglich, das Gerät vorn am Getriebegehäuse bzw. am angrenzenden Motorgehäuse so in einer Hand zu halten, dass dabei mit deren Zeigefinger eine Schraube auf den Bit zu halten ist, wobei zugleich die großflächige Ein-Ausschalt-Taste bequem mit den übrigen Fingern bedienbar ist, wobei zudem die freie Hand das Werkstück halten kann.

Die großflächige Gummiummantelung mit Noppenfläche über dem gesamten Griffbereich läßt den Akkuschrauber besonders griffsicher in der Bedienhand eingepaßt ruhen.

### Zeichnungen

Nachstehend ist die Erfmdung anhand eines Ausführungsbeispiels mit zugehöriger Zeichnung näher erläutert.

Es zeigen
- Figur 1: eine Seitenansicht des teilweise geöffneten Akkuschraubers
- Figur 2: eine Frontansicht des Akkuschraubers
- Figur 3: eine Seitenansicht des in einer Ladeschale positionierten Akkuschraubers
- Figur 4: einen vergrößerten Ausschnitt aus Figur 1 auf die Schalttaste
- Figur 5: einen vergrößerten Ausschnitt des Getriebegehäuses aus Figur 1
- Figur 6: eine Ansicht gemäß Figur 1 leicht gedreht
- Figur 7: eine Ansicht gemäß Figur 6, leicht gedreht
- Figur 8: eine räumliche Ansicht des Getriebegehäuses von vorn
- Figur 9: eine räumliche Ansicht des Getriebes von hinten
- Figur 10: eine räumliche Ansicht der Ladeschale von oben

### Beschreibung des Ausführungsbeispiels

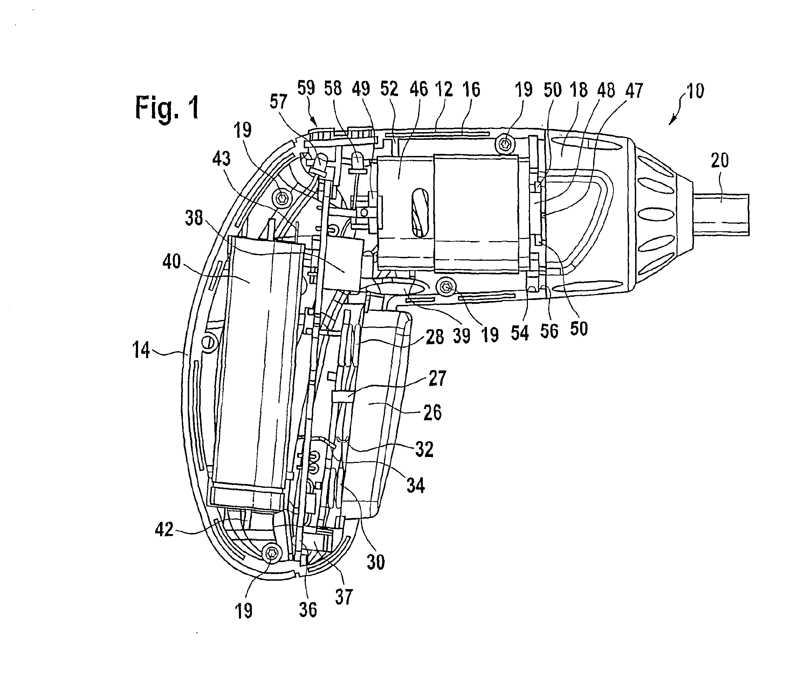

Figur 1 zeigt einen pistolenartigen Akkuschrauber 10 mit zur Schraubrichtung fluchtendem Motorgehäuse 12 und davon abgewinkeltem Handgriff 14. Das Motorgehäuse 12 mit Handgriff 14 wird aus zwei Halbschalen 16, 17 gebildet, die in einer Mittenebene 15 dicht aneinander abgestützt zusammenfügbar sind. Dazu greifen vier Schrauben durch Bohrungen der einen Halbschale 17 in vier Schraubdome 19 der anderen Halbschale 16 und halten beide aneinander fest.

Eine Ein-Ausschalttaste 26 ist annähernd über die gesamt innere Länge des Handgriffs 14 verlaufend angeordnet. Maschinenseitig bildet die Ein-Ausschalttaste 26 mit einem angeschraubten Kontaktblech 32 in Verbindung mit maschinenseitig fest angeordneten Gegenkontakten 34 einen Ein- und Ausschalter, so dass sich ein gesonderter, handelüblicher kastenartiger Standard-Schalter bzw. Taster erübrigt. Die Ein-Ausschalttaste 26 erlaubt wegen ihrer besonderen Länge ein bequemes Ein- und Ausschalten auch in schwierigen Haltepositionen des Akkuschraubers 10. Sie ist an ihren Längsseiten mit seitlichen in den Handgriff 14 tretenden Stützzungen 27 versehen, die an entsprechenden Gegenflächen der Halbschalen 16, 17 eine sichere Führung bilden und ein präzises, spielfreies Hin- und Her-Bewegen ermöglichen.

Über zwei harte Druckfedern 28, 30 ist die Ein-Ausschalttaste 26 am Handgriff 14 elastisch abgestützt, so dass nach dem Einschalten die Federn 28, 30 die Ein- und Ausschalttaste 26 bei deren Loslassen selbsttätig in ihre Aus-Position zurückbefördern, die Kontakte 32, 34 trennen und die Motorbewegung stoppen. Der Betätigungshub ist durch nicht näher bezeichnete Anschläge begrenzt und ist mit 1 bis 4 mm sehr kurz und bedienfreundlich.

Zum Eintritt der Ein-Ausschalt-Taste 26 in das Motorgehäuse 12 ist eine entsprechende jeweils hälftig in den Halbschalen 16, 17 angeordnete Öffnung 29 vorgesehen, die die Ein-/Ausschalttaste 26 schachtartig führend eng umgreift. Die Ein-Ausschalttaste 26 trägt auf ihrer dem Handgriff 14 zugewandten Stirnseite oben und unten je eine längs überstehende Zunge, die die Öffnung 29 überragen und sich von innen an deren Rand abstützen und die Ein-Ausschalttaste 26 in der Ausschaltposition daran abstützend festhalten und Lösen aus dem Gehäuse 12 hindern.

Die dem Kontaktblech 32 zugeordneten Gegenkontakte 34 sind auf einer länglichen, sich im Inneren des Handgriffs 14 erstreckenden Platine 36 dem Kontaktblech 32 gegenüberliegend und in dessen Hubbereich angeordnet. Außerdem trägt die Platine 36 in ihrem unteren Bereich zwei symmetrisch angeordnete Ladekontaktzungen 37, die rechtwinklig aus der Ebene der Platine 36 austreten und dann jeweils am Ende nach außen abgewinkelte große Auflageflächen bilden. Diese durchtreten jede Halbschale 16, 17 symmetrisch zur Mittenebene 15 im unteren Ende des Handgriffs 14. Dabei sind sie an jeder Durchtrittsstelle in je einer Vertiefung innerhalb der Handgriffkontur "versenkt" eingebettet und für die nach außen überstehenden Ladekontakte 23 der Ladeschale 22 zugänglich, die sie im Ladezustand bei Auflage auf der Ladeschale 22 übergreifen und sich aufgrund deren federnder Anordnung sicher kontaktiert abstützen.

Des weiteren trägt die Platine 36 etwa mittig, flach und flächennah nicht näher bezeichnete Störwiderstände und Kondensatoren und im oberen Bereich den Schiebeschalter 38 sowie am oberen Ende zwei Leuchtdioden 57, 58 zur optischen Anzeige der Drehrichtung.

Die Platine 36 ist mit ihrer Längsseite parallel zum Handgriff 14 und mit ihrer Schmalseite quer zur Mittenebene 15 angeordnet und dabei in nicht näher bezeichneten nutartigen Aussparungen der beiden Halbschalen 16, 17 spielfrei so geklemmt, dass sie sich von Innen gegen die Halbschalen 16, 17 stützt und dadurch eine Verstärkungsrippe im Handgriff 14 bildet. Parallel zur Platine 36 ist im Handgriff 14 eine Lithium-Ionen-Zelle mit den bekannten Vorteilen als Akku 40 eingelegt, der von den beiden Halbschalen 16, 17 im Montagezustand zangenartig umgriffen und lagegesichert wird und damit in die Festigkeitsstruktur des Gehäuses 12 integriert ist. Der Akku 40 weist oben und unten jeweils ein als Lötfahne dienendes Kontaktblech 42, 43 auf, das mit der Platine 36 verdrahtet ist.

Oberhalb der Ein-Ausschalttaste 26 - im Zwickel zwischen abgewinkeltem Handgriff 14 und Motorgehäuse 12 - ist ein Schiebetaster 39 quer zur Mitteneben 15 des Motorgehäuses 12 durch nicht bezeichnete, seitliche Öffnungen der Halbschalen 16 17 hin- und herschiebbar angeordnet. Der Schiebetaster 39 umgreift mit einer nicht näher bezeichneten etwa mittigen Aussparung gabelartig ein Schiebeorgan 41 eines kastenartigen, im oberen Bereich der Platine 36 fixierten Schiebeschalters 38. Das auf den Schiebeschalter 38 aufgesetzte Schiebeorgan 41 ist über den Schiebetaster 39 in die äußerste linke und rechte Seitenposition und in eine Mittenposition verstellbar.

Ein gleichstrombetriebener Motor 46 im vorderen Bereich des Motorgehäuses 12 wird von den Halbschalen 16,17 nach deren Montage zangenartig umgriffen und in seiner Arbeitslage spielfrei, parallel zum im Motorgehäuse 12 eingelegten Getriebegehäuse 18 fluchtend ausgerichtet gehalten. Der Motor 46 hat einen hinteren und vorderen stufenartigen Motorbund 48, 49, aus dem das hintere und vordere Ende der Motorwelle 45 austritt. Der Motor 46 ist über seinen vorderen und hinteren Motorbund 48, 49 in entsprechenden lagerbockartigen Rippen der Halbschalen 16, 17 zentriert abgestützt gelagert. Das vordere Ende 47 der Motorwelle 45 ist mit einer Abflachung bzw. mit einem Zweiflach versehen, insbesondere umgeformt, und greift damit in der Montagelage in eine entsprechende abgeflachte Ausnehmung eines Eingangsritzels 66 des im Getriebegehäuse 18 angeordneten Getriebes 65, das als Planetengetriebe ausgestaltet ist. Damit ist eine kraftschlüssige Kupplung mit grober Maßtoleranz und einfacher Montagemöglichkeit geschaffen, wobei der Motor 46 mit dem Getriebe 65 bzw. dem Getriebegehäuse 18 leicht zusammensteckbar ist und zusammengesteckt zur weiteren Montage in eine der Halbschalen 16, 17 einlegbar ist.

Stirnseitig umgreifen die beiden Halbschalen 16, 17 zangenartig und formschlüssig ein als separate zylindrische Baugruppe montiertes Getriebegehäuse 18 und halten es spielfrei fest. Dieses hat in zwei axialen, sich zum Motorgehäuse 12 erstreckenden, zungenartigen, teilzylindrischen Verlängerungen 60 eine Gehäuseringnut 54, die von einem Ringwulst 55 begrenzt wird. Der Ringwulst 55 greift in eine passende Gegenringnut 56 innen an der Stirnseite der Halbschalen 16, 17 des Motorgehäuses 12, wobei passende Gegenringwulste 53 der Halbschalen 16, 17 formschlüssig in die Gehäuseringnut 54 des Getriebegehäuses 18 greifen.

In die zwei awsymetrischen Aussparungen zwischen den zwei Verlängerungen 60 des Getriebegehäuses 18 greifen quer zur Längsrichtung des Motorgehäuses 12 abgewinkelte Gegenverlängerungen 61 fehlmontagesicher, spielfrei ein, die zugleich lagerbockartig den Motorbund 58 des Motors 46 zentrierend abstützen, so dass auch dieser in die Festigkeitsstruktur des Motorgehäuses 12 integriert ist. Gesonderte Befestigungselemente wie Schrauben oder dergleichen sind dabei unnötig. Dies erleichtert die Montage bei verringerter Anzahl von Einzelteilen.

Oben hinten trägt das Motorgehäuse 12 ein eingelegtes transparentes Fenster 59, das sich in der Trenneben längs erstreckt und mittig geteilt ist. Es gibt durch zwei Durchbrüche der Halbschalen 16, 17 den Blick auf eine blaue bzw. rote Leuchtdiode 57, 58 frei, jede einer Drehrichtung der Motorwelle 45 zugeordnet und mit dieser aufleuchtend.

Aus dem vorn zu einem abgerundeten Kegel zulaufenden Getriebegehäuse 18 tritt vorn eine Abtriebsspindel 20, die stirnseitig als Innensechskant 21 zur Aufnahme passender Standardbits ausgestaltet ist. Der Innensechskant 21 ist mit Mitteln versehen, die den eingeschobenen Schraubbit oder Bohrbit gegen Verlieren festhalten, so dass für deren axiale Entnehmen ein gewisser Widerstand von Hand überwunden werden muss.

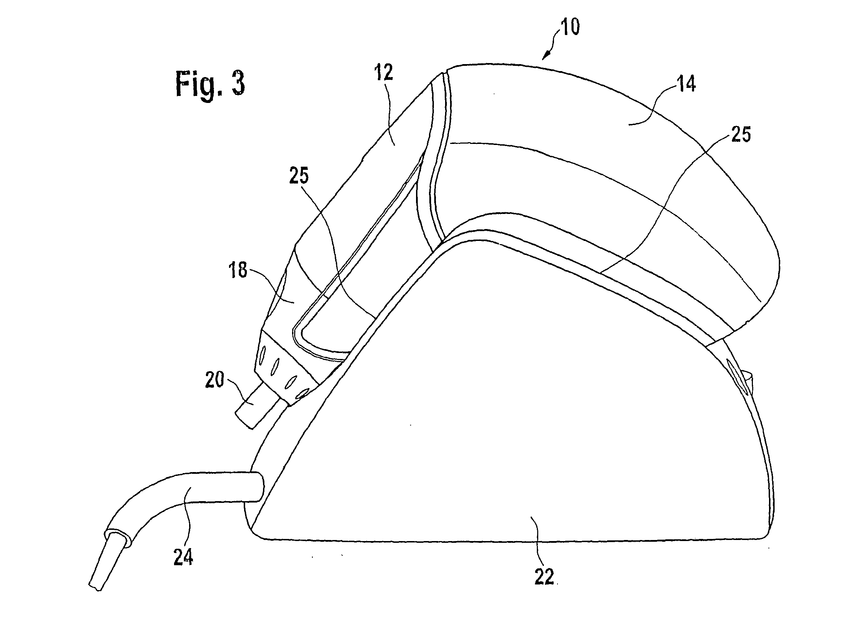

Figur 3 zeigt eine verhältnismäßig schmale, kastenartige Ladeschale 22, deren Außenkontur schrägflächig der pistolenförmigen Innen- bzw. Außenkontur des Akkuschraubers 10 angeglichen und nutartig vertieft ist. Der Akkuschrauber 10 kann daher mit seiner Innenseite in passende Einbettungen 25 für den Handgriff 14 bzw. des Motor- und Getriebegehäuse 12 und 18 spielfrei eintreten, und durch sein Eigengewicht gesichert lagern, wobei die Kontaktierung zwischen seinen Ladekontaktzungen 38 und den Ladekontakten 23 der Ladeschale 22 besonders sicher ist.

Die Ladekontakte 23 ragen aus der Kontur der Ladeschale 23 heraus, so dass der Akkuschrauber 10 mit seinem Handgriff 14 in eine entsprechende Aussparung der Ladeschale 12 rastet und sich dabei mit seinem Eigengewicht mit seinen Ladekontaktzungen 37 an den federnden Ladekontakten 23 der Ladeschale 22 abstützt. Allein durch Auflegen des Akkuschraubers 10 auf die Ladeschale 22 stellt sich sofort der Ladezustand mit hörbarem Klicken ein.

Die Ladeschale 22 weist in Betrachtungsrichtung links einen nicht näher bezeichneten elektrischen Steckkontakt zum Einführen eines Elektroanschlusskabels 24 zur Stromversorgung der Ladeschale 22 auf, die im hinteren, dem Handgriff 14 des Akkuschraubers 10 zugeordneten Bereich eine Ladekontrollleuchte 71 und eine senkrechte Einstecköffnung 73 zur Halterung eines Schraub- bzw. Bohrbits trägt.

Der Akkuschrauber 10 ruht mit seiner Innenseite, insbesondere mit seiner Ein-Ausschalttaste 26 auf der Oberseite einer Ladeschale 22 und nimmt dort im Aufliegen automatisch eine sichere Ladeposition ein, sofern die Ladeschale 22 mit dem Kabel 24 an eine passende Stromversorgung angeschlossen ist.

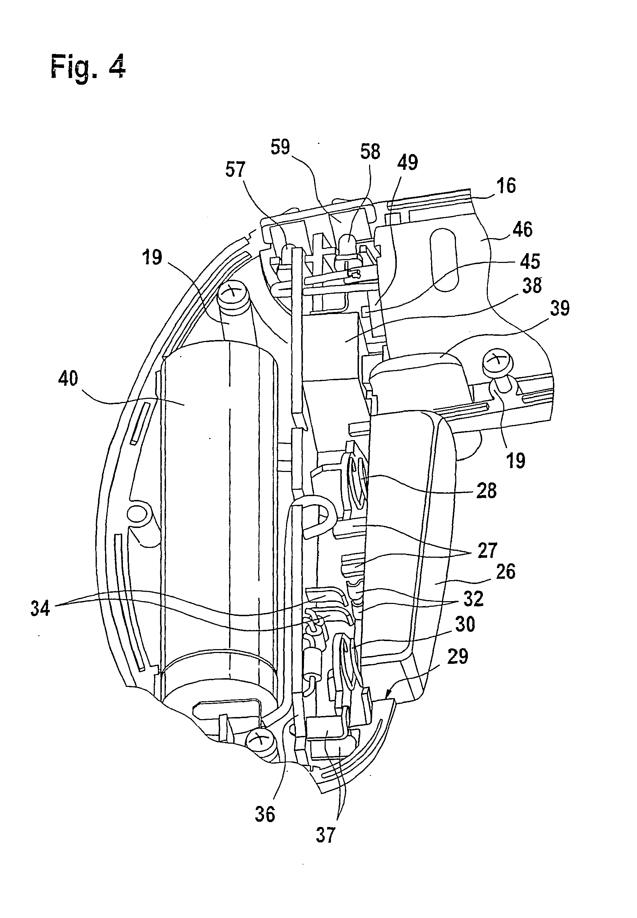

Figur 4 zeigt eine ausschnittsweise Vergrößerung der ersten Halbschale 16 mit den eingefügten Einzelteilen gemäß Figur 1, wobei die Ausgestaltung des Akkus 40 mit angrenzenden Teilen sowie der Platine 36 mit den daran befestigen Teilen sowie der Ein-Ausschalttaste 26 deutlich erkennbar ist.

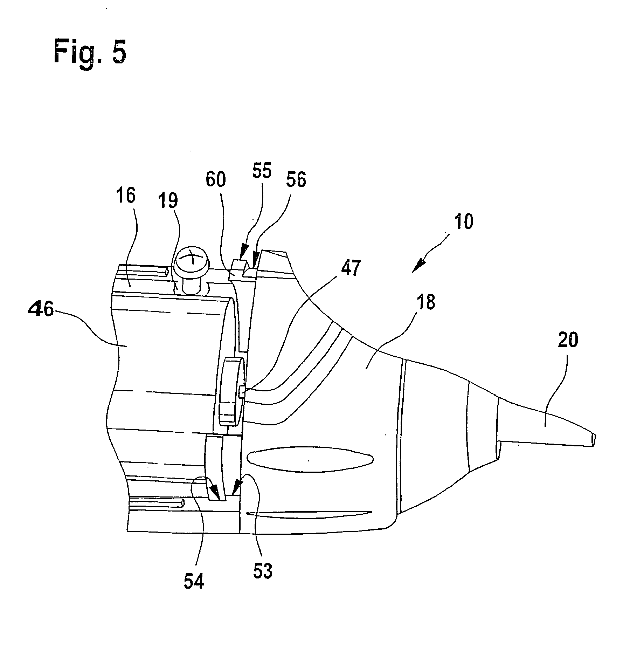

Figur 5 zeigt ausschnittsweise den vorderen Bereich des Akkuschraubers 10 mit der unteren Halbschale 16 mit Blick auf den Motor 46 und das Getriebegehäuse 18 - formschlüssig eingelegt.

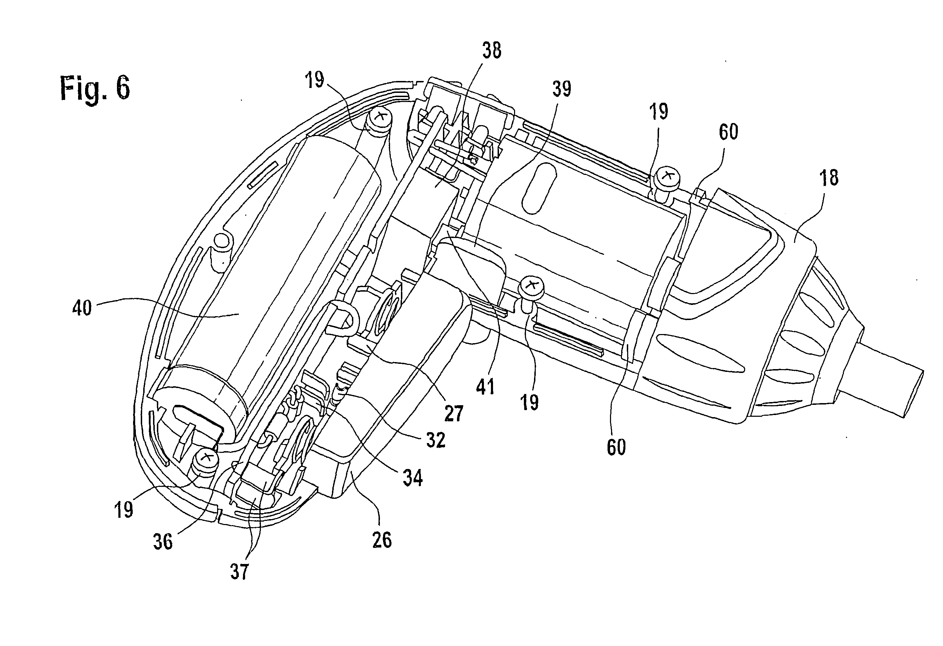

Figur 6 zeigt eine perspektivische Ansicht gemäß Figur 1 mit den entsprechenden Einzelheiten gemäß Figur 1, wobei über diese hinaus der Schiebetaster 39 zur Drehrichtungsumschaltung deutlicher erkennbar ist, der in seiner Mittenposition zugleich eine Einschaltsperre zum Betätigen der Ein-/Ausschalttaste 26 bildet. Dadurch ist in dieser Position ein ungewolltes Betätigen z.B. beim Transport in der Hosentasche nicht möglich.

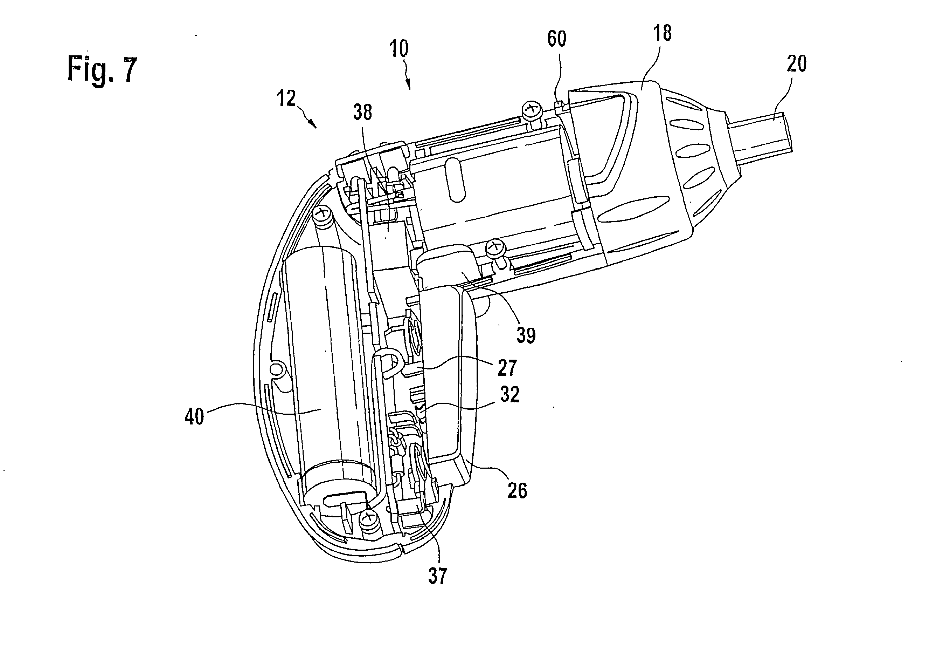

Figur 7 zeigt eine weitere räumliche Darstellung gemäß den Figuren 1 und 6, wobei die dazu beschriebenen Einzelheiten mit Hinweis auf diese Figuren nicht nochmals wiederholt werden, sondern deren Verständnis verbessern sollen.

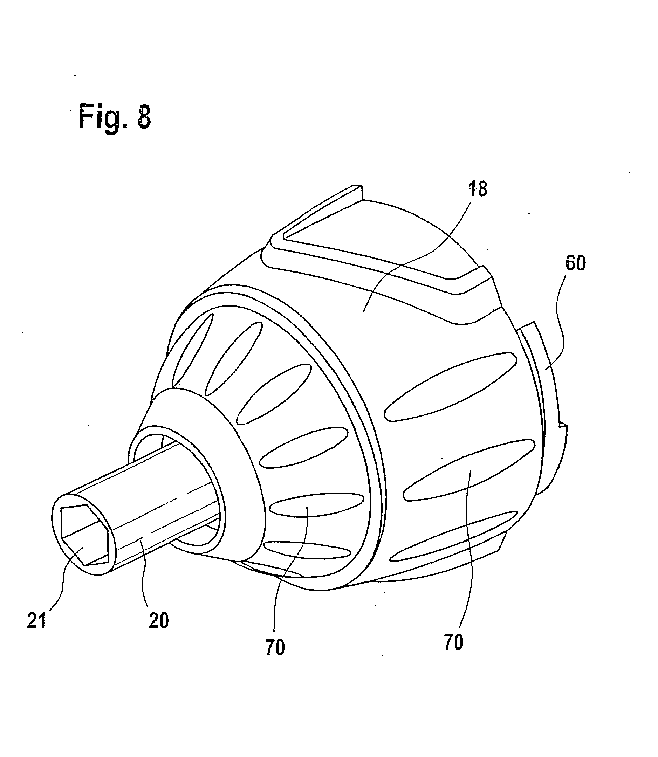

Figur 8 zeigt die Stirnseite des Getriebegehäuses 18 als Einzelheit mit eingebautem Getriebe 65 sowie der vorn herausragenden Abtriebswelle 20 mit dem Innensechskant 21 sowie den vorn Getriebegehäuse 18 nach hinten ragenden axialen Verlängerungen 60, wobei regelmäßige ovale Vertiefungen 70 auf der Außenseite des Getriebegehäuses 18 dessen Griffigkeit erhöhen.

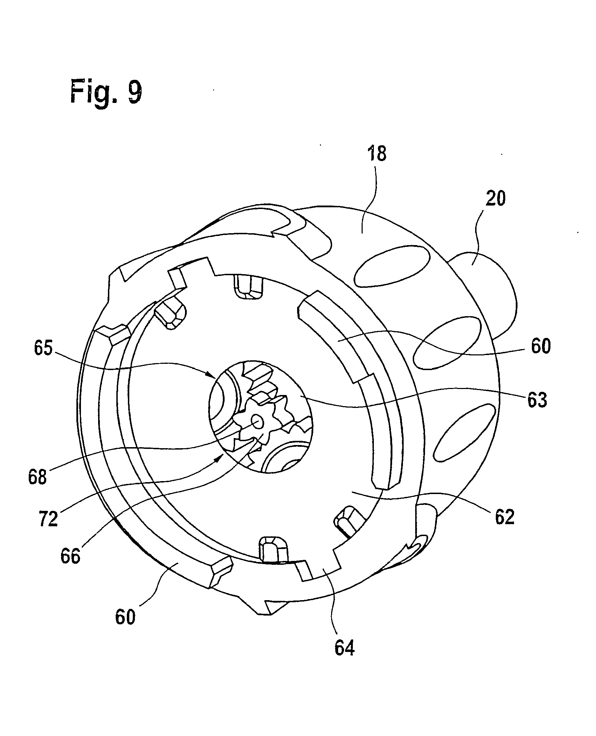

Figur 9 zeigt das hinten zylindrische Getriebegehäuse 18 gemäß Figur 8 in seiner Ansicht von hinten, wobei die beiden axialen Verlängerungen 60 und deren Zwischenräume, eine quer im Inneren des Getriebegehäuses 18 verrastete, über dessen gesamten Innendurchmesser reichende Federscheibe 62 mit einer Mittenöffnung 63 erkennbar sind.

Die Federscheibe 62 weist radial überstehende Flügel 64 auf, mit denen sie bajonettartig in entsprechende Aussparungen im Umfang des hinteren Endes des Getriebegehäuses 18 einlegbar und durch Verdrehen bzw. Verstemmen darin verrastbar ist.

Durch die Mittenöffnung 63 hindurch ist die Eingangswelle 66 des Getriebes 65 für den Eingriff der Motorwelle 47 zugänglich und mit deren abgeflachten Ende kuppelbar, so dass deren Drehmitnahme sicher erfolgen kann. Die Eingangswelle 66 hat eine Mittenausnehmung 68, die die Negativform des abgeflachten Endes der Motorwelle 47 bildet.

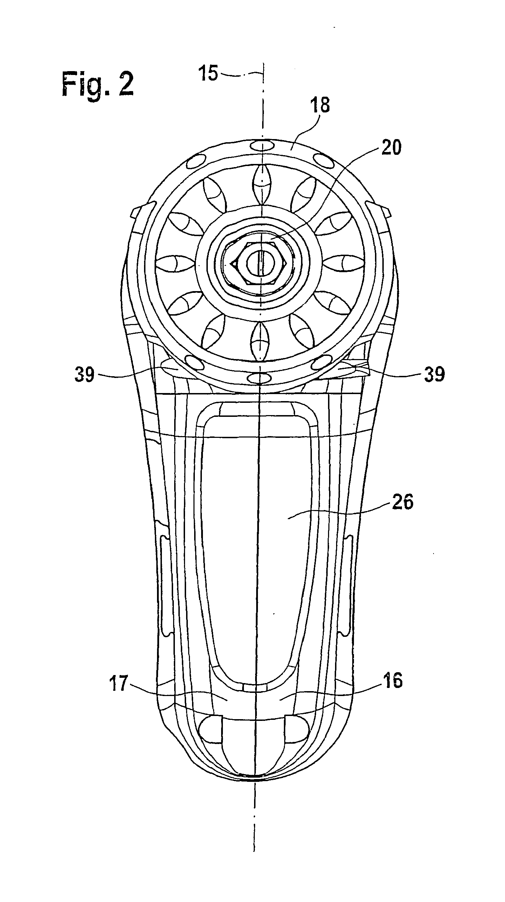

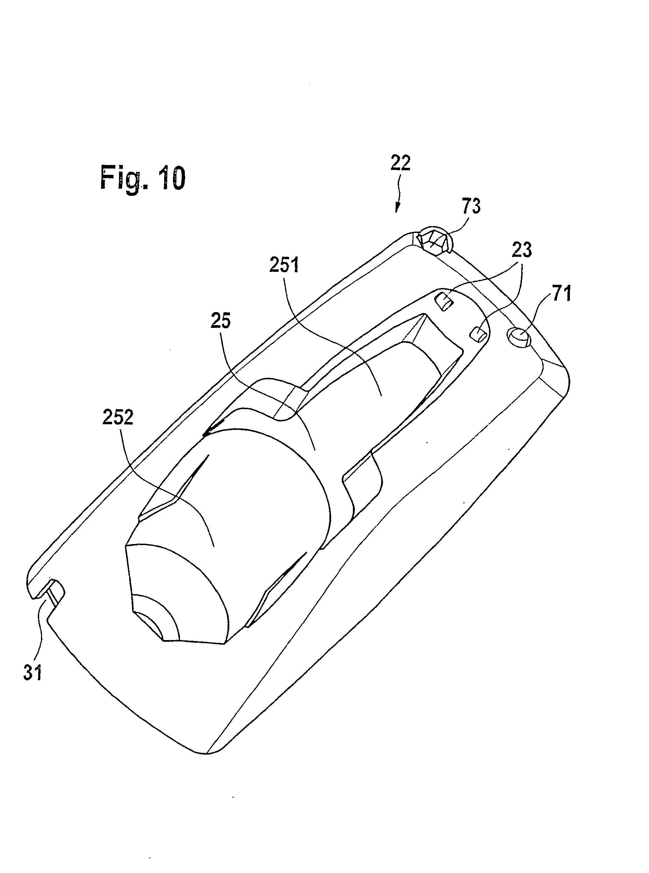

Figur 10 zeigt eine Draufsicht von oben auf die Ladeschale 22 mit Blick auf die Ein bettung 25, die in eine Handgriffbettung 251 und einer Getriebegehäusebettung 252 unterteilt ist, so dass der Akkuschrauber 10 bündig und nahezu spielfrei eindeutig und narrensicher so in die Ladeschale 22 einlegbar ist, dass er sicher aufliegt und seine Ladekontaktzungen 37 (Figur 1, 2, 4, 6, 7) sicheren Kontakt mit den Ladekontakten 23 der Ladeschale 22 behalten.

## Patentansprüche

1. Akkuschrauber mit einem Gehäuse (12, 18) mit einem Handgriff (14) mit Akku (40) sowie mit Ladekontaktzungen (37) zum Aufladen des Akkus (40), und eine zur Aufnahme elektrischer Kontakte (32, 34) und Steuerelemente dienende Platine (36), welche sich längs zum Handgriff (14) in dessen Inneren erstreckt und - mittels zweier Halbschalen (16, 17) des Gehäuses (12) zangenartig gehalten - zur Versteifung des Gehäuses (12) dient, **dadurch gekennzeichnet, dass** die Platine (36) mit ihrer Längsseite parallel zum Handgriff (14) und mit ihrer Schmalseite quer zur Mittenebene (15) angeordnet ist, wobei die Platine (36) in nutartigen Aussparungen der Halbschalen (16, 17) spielfrei so geklemmt ist, dass sie sich von Innen gegen die Halbschalen (16, 17) stützt und eine Verstärkungsrippe im Handgriff (14) bildet, und dass parallel zur Platine (36) eine einzelne, fest eingebaute Lithium-Ionen-Zeile als Akku (40) eingelegt ist, welche von den Halbschalen (16, 17) zangenartig umgriffen und lagegesichert ist und als Mittel zur Versteifung der Gehäusestruktur dient, und dass die Platine (36) in ihrem unteren Bereich zwei symmetrisch angeordnete Ladekontaktzungen (37) trägt, welche die Halbschalen (16, 17) symmetrisch zur Mittenebene (15) im unteren Ende des Handgriffs (14) durchtreten.

2. Akkuschrauber nach Anspruch 1, **dadurch gekennzeichnet, dass** die Platine (36) an ihrem oberen Ende zwei Leuchtdioden (57, 58) zur optischen Anzeige der Drehrichtung trägt, deren Licht oben hinten an dem Motorgehäuse (12) durch ein eingelegtes transparentes, sich längs erstreckendes und mittig geteiltes Fenster 59, welches zwei Durchbrüche durch die Halbschalen (16, 17) bildet, tritt.

3. Akkuschrauber nach einem der Ansprüche 1 oder 2, **dadurch gekennzeichnet, dass** maschinenseitig feste Gegenkontakte (34) in Verbindung mit einem mittels einer Ein-Ausschalttaste (26) bewegbaren und dabei mit den Gegenkontakten (34) kuppelbaren und bei Loslassen der Ein- Ausschalttaste (26) leicht lösbaren Kontaktblech (32) als Ein-/Ausschalter dienen.

4. Akkuschrauber nach Anspruch 3, **dadurch gekennzeichnet, dass** die Ein-Ausschalttaste (26) sich über annähernd die gesamte Länge des Handgriffs (14) erstreckt und in Verbindung mit einem kurzen Betätigungshub von 1 bis 5 mm, vorzugsweise 2 mm, an beliebiger Stelle einschaltend betätigbar ist.

5. Akkuschrauber nach Anspruch 3, **dadurch gekennzeichnet, dass** die Ein-Ausschalttaste (26) mittels zweier Spiralfedern (28, 30) entgegen der Betätigungsrichtung vorgespannt am Gehäuse (12) abgestützt ist.

6. Akkuschrauber nach Anspruch 1, **dadurch gekennzeichnet, dass** seine Arbeitsspindel (20) einen Innenmehrkant (21) zur Verwendung passender Schraub- oder Bohrbits mit Mehrkantschaft aufweist.

7. Akkuschrauber nach Anspruch 1, **dadurch gekennzeichnet, dass** die Platine (36) Gegenkontakte (34) zum Einschalten eines Motors (46), den Akku (40), einen Schiebeschalter (38) für die Drehrichtungsumkehr des Motors (46), zwei Leuchtdioden (57, 58) zur Anzeige der Drehrichtung und Mittel zum Steuern des Lade- und Entladestrom des Akkus (40) trägt.

8. Akkuschrauber nach Anspruch 1, **dadurch gekennzeichnet, dass** er von der Ein-Ausschalttaste (26) getrennte Mittel (38) zum Umschalten von Rechts- auf Linkslauf aufweist.

9. Akkuschrauber nach Anspruch 8, **dadurch gekennzeichnet, dass** zum Umschalten von Rechts- auf Linkslauf ein auf die Platine (36) gelöteter, Schiebeschalter (38) angeordnet ist, der über einen, insbesondere längsverschieblichen, Schiebetaster (39) betätigt wird.

10. Akkuschrauber nach Anspruch 9, **dadurch gekennzeichnet, dass** bei gedrückter Ein-Ausschalttaste (26) der Schlebeschalter (38) blockiert ist und dass die Ein-Ausschalttaste (26) dann blockiert ist, wenn der Schiebetaster (39) in der Mittelstellung steht.

11. Akkuschrauber nach Anspruch 1, **dadurch gekennzeichnet, dass** er - nach Einlegen einer die elektrischen Teile tragenden oder mit ihnen verdrahtetete Platine (36) mit Akku (40), eines Motors (46), einer Ein-Ausschalttaste (26), eines Schiebeschalters (38) mit Scheibetaster (39), zweier Leuchtdioden (57, 58) und eines als Fenster (59) dienenden, transparenten Kunststoffteils sowie des Getriebegehäuses (18) in die erste Halbschale (16), anschließendes Darüberfügen der zweiten Halbschale (17) und Verschrauben der Halbschalen (16, 17) mit nur vier gleichen Schrauben - fertig montiert ist.

12. Akkuschrauber nach Anspruch 1, **dadurch gekennzeichnet, dass** an jeder Halbschale (16, 17) im Bereich des Handgriffs (14) eine großflächige, wulstig abstehende Gummiummantelung mit Noppenstruktur angeordnet ist.

## Claims

1. Rechargeable-battery-operated screwdriver comprising a housing (12, 18) having a handle (14) with a rechargeable battery (40) and also with charging contact tongues (37) for charging the rechargeable battery (40), and a printed circuit board (36) which serves to hold electrical contacts (32, 34) and control elements and which extends in a longitudinal manner in relation to the handle (14) into the interior thereof and - such that it is held in the manner of tongs by means of two half-shells (16, 17) of the housing (12) - serves to reinforce the housing (12), **characterized in that** the printed circuit board (36) is arranged parallel to the handle (14) by way of its longitudinal side and transverse to the centre plane (15) by way of its narrow side, wherein the printed circuit board (16) is clamped without play in groove-like cutouts in the half-shells (16, 17) such that it is supported from the inside against the half-shells (16, 17) and forms a reinforcing rib in the handle (14), and **in that** an individual, fixedly installed lithium-ion cell is inserted parallel to the printed circuit board (36) as the rechargeable battery (40), the said lithium-ion cell being surrounded in the manner of tongs and being secured in position by the half-shells (16, 17) and serving as means for reinforcing the housing structure, and **in that** the printed circuit board (36) has, in its lower region, two symmetrically arranged charging contact tongues (37) which pass through the half-shells (16, 17) symmetrically to the centre plane (15) in the lower end of the handle (14).

2. Rechargeable-battery-operated screwdriver according to Claim 1, **characterized in that** the printed circuit board (36) has, at its upper end, two light-emitting diodes (57, 58) for optically indicating the direction of rotation, the light from the said light-emitting diodes passing, at the top and at the rear of the motor housing (12), through an inserted transparent window (59) which extends in the longitudinal direction and is divided in the centre and forms two apertures through the half-shells (16, 17).

3. Rechargeable-battery-operated screwdriver according to either of Claims 1 and 2, **characterized in that** mating contacts (34) which are fixed to the machine, in conjunction with a contact plate (32) which can be moved by means of an on/off switching button (26) and, in the process, can be coupled to the mating contacts (34) and can be easily released when the on/off switching button (26) is released, serve as the on/off switching button.

4. Rechargeable-battery-operated screwdriver according to Claim 3, **characterized in that** the on/off switching button (26) extends over approximately the entire length of the handle (14) and, in conjunction with a short operating movement of 1 to 5 mm, preferably 2 mm, can be operated, in order to be switched on, at any point.

5. Rechargeable-battery-operated screwdriver according to Claim 3, **characterized in that** the on/off switching button (26) is supported on the housing (12), such that it is prestressed against the operating direction, by means of two helical springs (28, 30).

6. Rechargeable-battery-operated screwdriver according to Claim 1, **characterized in that** its working spindle (20) has an internal polygon (21) for the use of suitable screw or drill bits with a polygonal shaft.

7. Rechargeable-battery-operated screwdriver according to Claim 1, **characterized in that** the printed circuit board (36) is fitted with mating contacts (34) for switching on a motor (46), the rechargeable battery (40), a sliding switch (38) for reversing the direction of rotation of the motor (46), two light-emitting diodes (57, 58) for indicating the direction of rotation, and means for controlling the charging and discharging current of the rechargeable battery (40).

8. Rechargeable-battery-operated screwdriver according to Claim 1, **characterized in that** it has means (38), which are separated from the on/off switching button (26), for changing over from clockwise operation to anticlockwise operation.

9. Rechargeable-battery-operated screwdriver according to Claim 8, **characterized in that**, in order to change over from clockwise operation to anticlockwise operation, a sliding switch (38) which is soldered onto the printed circuit board (36) is provided, the said sliding switch being operated by means of an, in particular longitudinally displaceable, sliding button (39).

10. Rechargeable-battery-operated screwdriver according to Claim 9, **characterized in that** the sliding switch (38) is blocked when the on/off switching button (26) is depressed, and **in that** the on/off switching button (26) is blocked when the sliding button (39) is in the central position.

11. Rechargeable-battery-operated screwdriver according to Claim 1, **characterized in that** it is completely mounted - after insertion of a printed circuit board (36) which is fitted with the electrical parts or is wired to said electrical parts and has the rechargeable battery (40), of a motor (46), of an on/off switching button (26), of a sliding switch (38) with a sliding button (39), of two light-emitting diodes (57, 58) and of a transparent plastic part, which serves as a window (59), and of the gear-mechanism housing (18), into the first half-shell (16), subsequent mounting of the second half-shell (17) onto the said first half-shell, and screw-connection of the half-shells (16, 17) using just four identical screws.

12. Rechargeable-battery-operated screwdriver according to Claim 1, **characterized in that** a rubber sheath which has a large surface area and projects in the manner of a bead and has a studded structure is arranged on each half-shell (16, 17) in the region of the handle (14).

## Revendications

1. Visseuse à batterie comprenant un boîtier (12, 18) avec une poignée (14) avec batterie (40) et avec des languettes de contact de charge (37) pour charger la batterie (40), et une platine (36) servant à recevoir des contacts électriques (32, 34) et des éléments de commande, laquelle s'étend le long de la poignée (14) à l'intérieur de celle-ci, et sert à renforcer le boîtier (12) en étant retenue à la manière d'une pince au moyen de deux demi-coques (16, 17) du boîtier (12), **caractérisée en ce que** la platine (36) est disposée avec son côté long parallèlement à la poignée (14) et avec son côté court transversalement au plan médian (15), la platine (36) étant serrée sans jeu dans des évidements de type rainures des demi-coques (16, 17) de telle sorte qu'elle s'appuie depuis l'intérieur contre les demi-coques (16, 17) et qu'elle forme une nervure de renforcement dans la poignée (14), et **en ce qu'**une pile à ions lithium unique incorporée fixement est introduite en tant que batterie (40), laquelle est saisie sur son pourtour à la manière d'une pince par les demi-coques (16, 17) et est fixée en position et sert de moyen pour le renforcement de la structure du boîtier, et **en ce que** la platine (36) porte dans sa région inférieure deux languettes de contact de charge disposées symétriquement (37) qui traversent les demi-coques (16, 17) symétriquement par rapport au plan médian (15) dans l'extrémité inférieure de la poignée (14).

2. Visseuse à batterie selon la revendication 1, **caractérisée en ce que** la platine (36) porte sur son extrémité supérieure deux diodes électroluminescentes (57, 58) pour l'affichage optique du sens de rotation, dont la lumière parvient en haut à l'arrière sur le boîtier de moteur (12) à travers une fenêtre (59) incorporée transparente s'étendant longitudinalement et divisée en son centre, laquelle forme deux orifices à travers les demi-coques (16, 17).

3. Visseuse à batterie selon l'une quelconque des revendications 1 ou 2, **caractérisée en ce que** des contacts conjugués fixes (34) du côté de la machine servent d'interrupteur de marche/arrêt en association avec une tôle de contact (32) déplaçable au moyen d'une touche de marche/arrêt (26) et pouvant être accouplée en l'occurrence avec les contacts conjugués (34) et pouvant être facilement libérable lors du relâchement de la touche de marche/arrêt (26).

4. Visseuse à batterie selon la revendication 3, **caractérisée en ce que** la touche de marche/arrêt (26) s'étend approximativement sur toute la longueur de la poignée (14) et peut être actionnée pour la mise en marche en association avec une courte course d'actionnement de 1 à 5 mm, de préférence de 2 mm, à un endroit quelconque.

5. Visseuse à batterie selon la revendication 3, **caractérisée en ce que** la touche de marche/arrêt (26) est supportée de manière précontrainte à l'encontre du sens d'actionnement sur le boîtier (12) au moyen de deux ressorts spiraux (28, 30).

6. Visseuse à batterie selon la revendication 1, **caractérisée en ce que** sa broche de travail (20) présente une empreinte polygonale en creux (21) pour l'utilisation d'embouts de vissage ou de perçage à tige polygonale.

7. Visseuse à batterie selon la revendication 1, **caractérisée en ce que** la platine (36) porte des contacts conjugués (34) pour mettre en marche un moteur (46), la batterie (40), un commutateur coulissant (38) pour l'inversion du sens de rotation du moteur (46), deux diodes électroluminescentes (57, 58) pour afficher le sens de rotation et des moyens pour commander le courant de charge et de décharge de la batterie (40).

8. Visseuse à batterie selon la revendication 1, **caractérisée en ce qu'**elle présente des moyens (38) séparés de la touche de marche/arrêt (26) pour commuter de droite à gauche.

9. Visseuse à batterie selon la revendication 8, **caractérisée en ce que** pour la commutation de droite à gauche on dispose sur la platine (36) un commutateur coulissant (38), brasé, qui est actionné par le biais d'un bouton coulissant (39) notamment déplaçable en longueur.

10. Visseuse à batterie selon la revendication 9, **caractérisée en ce que**, lorsque la touche de marche/arrêt (26) est enfoncée, le commutateur coulissant (38) est bloqué, et **en ce que** la touche de marche/arrêt (26) est ensuite bloquée lorsque le bouton coulissant (39) est dans la position intermédiaire.

11. Visseuse à batterie selon la revendication 1, **caractérisée en ce que** son montage final est réalisé après l'introduction d'une platine (36) portant les pièces électriques ou câblée avec celles-ci avec la batterie (40), d'un moteur (46), d'une touche de marche/arrêt (26), d'un commutateur coulissant (38) avec un bouton coulissant (39), de deux diodes électroluminescentes (57, 58) et d'une pièce en plastique transparente servant de fenêtre (59), ainsi que du boîtier de transmission (18) dans la première demi-coque (16), suivie de l'assemblage par-dessus celle-ci de la deuxième demi-coque (17) et du vissage des demi-coques (16, 17) avec seulement quatre vis identiques.

12. Visseuse à batterie selon la revendication 1, **caractérisée en ce qu'**une enveloppe en caoutchouc avec une structure moletée, saillant en forme de bourrelet sur une grande surface est disposée au niveau de chaque demi-coque (16, 17) dans la région de la poignée (14).
